# EUROPEAN PATENT SPECIFICATION

(11) **EP 3 455 122 B1**
(45) Date of publication and mention of the grant of the patent: **04.08.2021**
(21) Application number: 16728356.3
(22) Date of filing: 13.05.2016
(51) Int. Cl.: B62D 55/04, B62D 55/205, B60C 27/08, F16G 15/00

(54) **IMPROVEMENTS IN OR RELATING TO TRACK APPARATUS**
VERBESSERUNGEN AN ODER IM ZUSAMMENHANG MIT EINER RAUPENVORRICHTUNG
PERFECTIONNEMENTS APPORTÉS OU SE RAPPORTANT À UN APPAREIL À CHENILLES

(43) Date of publication of application: 20.03.2019
(73) Proprietor: Clark Tracks Limited, Dumfries, Dumfriesshire DG2 0JE (GB)
(72) Inventor: KELLY, Stewart, Lockerbie Dumfries & Galloway DG11 2SA (GB)
(74) Representative: Lawrie IP Limited
(86) International application number: PCT/GB2016/051399
(87) International publication number: WO 2017/194905

(56) References cited:
- WO-A1-2013/135427
- DE-A1- 4 402 946
- DE-U1-202013 103 211
- US-A- 2 008 210
- US-A1- 2010 069 188

## Description

### Field of the invention

This invention relates to a link member for a continuous track system and a continuous track system.

### Background to the invention

When new continuous track systems are fitted to wheeled vehicles they will quickly slacken off over the first few days of use. This requires the track system to be re-tensioned. Re-tensioning may involve the replacement of longer track links with shorter track links and often the removal of one or more full track plates from the system.

The slackening off of new tracks is a result of the initial wear of all the components of the track system. This is often referred to as "bedding in". New track systems are required to be re-tensioned frequently during the initial period of use, with this task becoming less frequent as the tracks bed in.

Re-tensioning of tracks is time consuming and inconvenient, particularly if track plates have to be removed. DE 20 2013 103211 U1 discloses a similar device.

The present inventor has appreciated the shortcomings with such known continuous track systems. A first aspect of the invention is disclosed in claim 1.

The link member may have a longitudinal axis and a lateral axis. The link member may be symmetrical along the longitudinal and/or lateral axes. Alternatively, the link member may be symmetrical along the lateral axis and non-symmetrical along the longitudinal axis.

The link member may be forged. The link member may be a forged member. The link member may be forged from steel. The steel may be a boron alloy steel.

The side members and the pin members may be arranged such that the link member is substantially square shaped in plan view.

The link member may be between 40mm and 250mm long. The link member may be around 123mm long. The link member may be between 115mm and 130mm long. The link member may be around 115mm long. The link member may be between 50mm and 120mm wide. The link member may be around 90mm wide. The link member may be between 85mm and 90mm wide.

The link member may be between 25mm and 55mm tall. The link member may be around 48mm tall. The link member may be between 45mm and 55mm tall.

The side members may be substantially elongate planar members. Each side member may have a longitudinal axis.

The side members may be arranged to be parallel to one another.

The side members may be arranged to be substantially perpendicular to the pin members.

The side members may be identical. Alternatively, one side member may have a different length, width and/or height that the other side member. Each side member may have differently shaped outwardly facing surface.

The side members may have curved outwardly facing surface. At least a portion of the outwardly facing surface of the side member may be at least partially spherical in shape. One or more portions of the outwardly facing surface of the side members may be at least partially spherical in shape.

The side members may have substantially planar inwardly facing surfaces. The planes of the surfaces of the two side members may be parallel.

The side members may have bulbous portions or lobe portions located at each end thereof.

The outwardly facing surfaces and/or the inwardly facing surfaces of the side members may be smooth.

The side members may be between 40mm and 250mm long. The side members may be around 123mm long. The side members may be around 121mm long. The side members may be between 115mm and 130mm long.

One side member may be an inner side member and the other side member may be an outer side member. The outer side member may be longer than the inner side member. The outer side member may be taller than the inner side member. The outer side member may be thicker than the inner side member.

The inner side member may be between 40mm and 250mm long. The inner side member may be around 121mm long. The inner side member may be between 115mm and 127mm long.

The inner side member may be between 25mm and 55mm tall. The inner side member may be around 40mm tall. The inner side member may be between 35mm and 45mm tall.

The outer side member may be between 40mm and 250mm long. The outer side member may be around 123mm long. The outer side member may be between 115mm and 130mm long.

The outer side member may be between 25mm and 55mm tall. The outer side member may be around 48mm tall. The outer side member may be between 45mm and 55mm tall.

The distance between the inwardly facing surfaces of the side members may be between 40mm and 100mm. The distance between the inwardly facing surfaces of the side members may be around 52.5mm. The distance between the inwardly facing surfaces the side members may be between 50mm and 55mm.

The side members may have a height that is greater than the height, thickness, or width of the pin members.

At least one side member may include a flange surface. The flange surface may circumscribe an inwardly facing surface of the side member. Both side members may include a flange surface. Both flange surfaces may circumscribe an inwardly facing surface of the side member. The flange surface of the second side member may be larger than the flange surface of the first side member.

The lateral cross section of each pin member may be substantially the same shape along the entire length of the pin member.

The pin members may be substantially elongate members. Each pin member may have a longitudinal axis.

The pin members may be substantially parallel to one another.

The pin members may be arranged to be substantially perpendicular to the side members.

The pin members may be identical. Alternatively, the pin members may be differently shaped.

The outer surface of the pin members may be smooth.

The distance between the inwardly facing surfaces of the pin members may be between 40mm and 160mm. The distance between the inwardly facing surfaces of the pin members may be around 58mm. The distance between the inwardly facing surfaces the pin members may be between 55mm and 65mm.

The pin members may be between 40mm and 100mm long. The pin members may be around 52.5mm long. The pin members may be between 45mm and 60mm long.

The pin members may be arranged such that they join the side members at a location which is between the lowest portion and highest portion of the side member.

The pin members may have a lateral cross section with a single axis of symmetry.

The axis of symmetry of the lateral cross section of each pin member may be perpendicular to the longitudinal axis of the pin member.

The axis of symmetry of the lateral cross section of each pin member may be parallel to the longitudinal axis of each side member.

The axes of symmetry of the lateral cross sections of the pin members may be parallel.

The term ovate used throughout this specification is considered to mean a shape that is the shape of the longitudinal section of an ovoid, or is generally the same shape as the longitudinal section of an ovoid.

The lateral cross section of each pin member includes a longitudinal axis and a lateral axis. The longitudinal axis is aligned with the axis of symmetry. The longitudinal axis is parallel to the axis of symmetry.

The lateral cross section may have a length in the direction of the longitudinal axis and a width in the direction of the lateral axis. The length of the lateral cross section may be greater than the width of the lateral cross section.

The lateral cross section of each pin member may have a first portion and a second portion. The first portion may be partially circular in shape. The second portion may be partially circular in shape. The first portion may have a first radius. The second portion may have a second radius. The first radius may be greater that the second radius. The pin member may thus have a partially cylindrical first portion and a partially cylindrical second portion.

The first radius of the first portion may be between 8mm and 20mm. The first radius of the first portion may be around 15mm. The first radius of the first portion may be between 12.5mm and 17.5mm.

The second radius of the second portion may be between 8mm and 20mm. The second radius of the second portion may be around 12.2mm. The second radius of the second portion may be between 12.5mm and 17.5mm.

The first portions of the lateral cross sections of each pin member may be arranged to face each other.

The first portions of the lateral cross sections of each pin member may face inwards and the second portions of the lateral cross sections of each pin member may face outwards.

The centre of the partial circle of the first portion of the lateral cross section may lie on the axis of symmetry of the lateral cross section. The centre of the partial circle of the second portion of the lateral cross section may lie on the axis of symmetry of the lateral cross section. The centres of the partial circles of the first and second portions of the lateral cross section may lie on the axis of symmetry of the lateral cross section. The centre of the partial circle defined by the radius of the first portion may lie outside the circle defined by the radius of the second portion. Similarly, the centre of the partial circle defined by the radius of the second portion may lie outside the circle defined by the radius of the first portion.

The centre of the circle defined by the radius of the first portion may lie on the axis of symmetry of the lateral cross section. The centre of the circle defined by the radius of the second portion may lie on the axis of symmetry of the lateral cross section. The centre of the circle defined by the radius of the first portion may lie outside the circle defined by the radius of the second portion. Similarly, the centre of the circle defined by the radius of the second portion may lie outside the circle defined by the radius of the first portion.

The lateral cross section may have a maximum length of around 31.5mm. The maximum length of the lateral cross section may be between 16mm and 40mm. The maximum length of the lateral cross section may be between 25mm and 35mm.

The pin members may have a maximum width of around 31.5mm. The maximum width of the pin members may be between 16mm and 40mm. The maximum width of the pin members may be between 25mm and 35mm.

The lateral cross section may have a maximum height of around 27mm. The maximum height of the lateral cross section may be between 16mm and 40mm. The maximum height of the lateral cross section may be between 22mm and 32mm.

The pin members may have a maximum height of around 27mm. The maximum height of the pin members may be between 16mm and 40mm. The maximum height of the pin members may be between 25mm and 35mm.

The line joining the points where the length of the lateral cross section is at its maximum may be aligned with the axis of symmetry of the lateral cross section. The line joining the points where the height of the lateral cross section is at its maximum may be perpendicular to the axis of symmetry of the lateral cross section. The point where the line joining the points where the length of the lateral cross section is at its maximum and the line joining the points where the height of the lateral cross section is at its maximum intersect may be the centre point of the lateral cross section. This may be the centre point of each pin member.

The distance between the centre points of each lateral cross section of each pin member may be between 40mm and 200mm. The distance between the centre points of each lateral cross section of each pin member may be around 75mm. The distance between the centre points of each lateral cross section of each pin member may be around 85mm. The distance between the centre points of each lateral cross section of each pin member may be between 75mm and 85mm.

According to a second aspect of the present invention there is provided a track plate for a continuous track system for a wheeled vehicle comprising:
a track plate link, the track plate link being attached to the track plate; and
a link member, for connecting the track plate link to an adjacent track plate link, the link member comprising:
   two side members; and
   two pin members,
   wherein the two side members oppose each other and are joined by the two pin members,
   wherein the link member is formed as a single piece,
   wherein the pin members are longitudinal members having an ovate lateral cross section, and
   wherein the lateral cross section of each pin member is substantially the same shape along the entire length of the pin.

The link member may be moveably connected to the track plate link. The link member may be connected to the track plate link such that the link member may pivot or rotate relative to the track plate link.

The track plate link may include a pin member engaging portion. The pin member engaging portion may be a hook or loop. The pin member engaging portion may be hook shaped. The hook or loop of the pin member engaging portion may include a generally U-shaped channel for receiving the pin member therein. The hook or loop of the pin member engaging portion may include an elongate U-shaped channel portion.

The pin member engaging portion may be configured such that, in use, the pin member of the link member is received therein and moves with respect thereto.

The track plate link may be a longitudinal member having a lateral cross section that is C-shaped. The track plate link may be a longitudinal member having a lateral cross section that is generally C-shaped.

The track plate link may be around 20mm thick. The track plate link may be between 10mm and 40mm thick.

The pin member engaging portion may be provided in the lower or upper portion of the track plate link. Pin member engaging portions may be provided in the lower and upper portions of the track plate link. The pin member engaging portions may be located at opposite ends of the track plate link. The track plate link may include two pin member engaging portions, such that two link members may be connected thereto.

The link member may have a longitudinal axis and a lateral axis. The link member may be symmetrical along the longitudinal and/or lateral axes. Alternatively, the link member may be symmetrical along the lateral axis and non-symmetrical along the longitudinal axis.

The link member may be forged. The link member may be a forged member. The link member may be forged from steel. The steel may be a boron alloy steel.

The side members and the pin members may be arranged such that the link member is substantially square shaped in plan view.

The link member may be between 40mm and 250mm long. The link member may be around 123mm long. The link member may be between 115mm and 130mm long. The link member may be around 115mm long.

The link member may be between 50mm and 120mm wide. The link member may be around 90mm wide. The link member may be between 85mm and 90mm wide.

The link member may be between 25mm and 55mm tall. The link member may be around 48mm tall. The link member may be between 45mm and 55mm tall.

The side members may be substantially elongate planar members. Each side member may have a longitudinal axis.

The side members may be arranged to be parallel to one another.

The side members may be arranged to be substantially perpendicular to the pin members.

The side members may be identical. Alternatively, one side member may have a different length, width and/or height that the other side member. Each side member may have differently shaped outwardly facing surface.

The side members may have curved outwardly facing surface. At least a portion of the outwardly facing surface of the side member may be at least partially spherical in shape. One or more portions of the outwardly facing surface of the side members may be at least partially spherical in shape.

The side members may have substantially planar inwardly facing surfaces. The planes of the surfaces of the two side members may be parallel.

The side members may have bulbous portions or lobe portions located at each end thereof.

The outwardly facing surfaces and/or the inwardly facing surfaces of the side members may be smooth.

The side members may be between 40mm and 250mm long. The side members may be around 123mm long. The side members may be around 121mm long. The side members may be between 115mm and 130mm long.

One side member may be an inner side member and the other side member may be an outer side member. The outer side member may be longer than the inner side member. The outer side member may be taller than the inner side member. The outer side member may be thicker than the inner side member.

The inner side member may be between 40mm and 250mm long. The inner side member may be around 121mm long. The inner side member may be between 115mm and 127mm long.

The inner side member may be between 25mm and 55mm tall. The inner side member may be around 40mm tall. The inner side member may be between 35mm and 45mm tall.

The outer side member may be between 40mm and 250mm long. The outer side member may be around 123mm long. The outer side member may be between 115mm and 130mm long.

The outer side member may be between 25mm and 55mm tall. The outer side member may be around 48mm tall. The outer side member may be between 45mm and 55mm tall.

The distance between the inwardly facing surfaces of the side members may be between 40mm and 100mm. The distance between the inwardly facing surfaces of the side members may be around 52.5mm. The distance between the inwardly facing surfaces the side members may be between 50mm and 55mm.

The side members may have a height that is greater than the height, thickness, or width of the pin members.

At least one side member may include a flange surface. The flange surface may circumscribe an inwardly facing surface of the side member. Both side members may include a flange surface. Both flange surfaces may circumscribe an inwardly facing surface of the side member. The flange surface of the second side member may be larger than the flange surface of the first side member.

The lateral cross section of each pin member may be substantially the same shape along the entire length of the pin member.

The pin members may be substantially elongate members. Each pin member may have a longitudinal axis.

The pin members may be substantially parallel to one another.

The pin members may be arranged to be substantially perpendicular to the side members.

The pin members may be identical. Alternatively, the pin members may be differently shaped.

The outer surface of the pin members may be smooth.

The distance between the inwardly facing surfaces of the pin members may be between 40mm and 160mm. The distance between the inwardly facing surfaces of the pin members may be around 58mm. The distance between the inwardly facing surfaces the pin members may be between 55mm and 65mm.

The pin members may be between 40mm and 100mm long. The pin members may be around 52.5mm long. The pin members may be between 45mm and 60mm long.

The pin members may be arranged such that they join the side members at a location which is between the lowest portion and highest portion of the side member.

The pin members may have a lateral cross section with a single axis of symmetry.

The axis of symmetry of the lateral cross section of each pin member may be perpendicular to the longitudinal axis of the pin member.

The axis of symmetry of the lateral cross section of each pin member may be parallel to the longitudinal axis of each side member.

The axes of symmetry of the lateral cross sections of the pin members may be parallel.

The lateral cross section of each pin member includes a longitudinal axis and a lateral axis. The longitudinal axis is aligned with the axis of symmetry. The longitudinal axis is parallel to the axis of symmetry.

The lateral cross section may have a length in the direction of the longitudinal axis and a width in the direction of the lateral axis. The length of the lateral cross section may be greater than the width of the lateral cross section.

The lateral cross section of each pin member may have a first portion and a second portion. The first portion may be partially circular in shape. The second portion may be partially circular in shape. The first portion may have a first radius. The second portion may have a second radius. The first radius may be greater that the second radius. The pin member may thus have a partially cylindrical first portion and a partially cylindrical second portion.

The first radius of the first portion may be between 8mm and 20mm. The first radius of the first portion may be around 15mm. The first radius of the first portion may be between 12.5mm and 17.5mm.

The second radius of the second portion may be between 8mm and 20mm. The second radius of the second portion may be around 12.2mm. The second radius of the second portion may be between 12.5mm and 17.5mm.

The first portions of the lateral cross sections of each pin member may be arranged to face each other.

The first portions of the lateral cross sections of each pin member may face inwards and the second portions of the lateral cross sections of each pin member may face outwards.

The centre of the partial circle of the first portion of the lateral cross section may lie on the axis of symmetry of the lateral cross section. The centre of the partial circle of the second portion of the lateral cross section may lie on the axis of symmetry of the lateral cross section. The centres of the partial circles of the first and second portions of the lateral cross section may lie on the axis of symmetry of the lateral cross section. The centre of the partial circle defined by the radius of the first portion may lie outside the circle defined by the radius of the second portion. Similarly, the centre of the partial circle defined by the radius of the second portion may lie outside the circle defined by the radius of the first portion.

The centre of the circle defined by the radius of the first portion may lie on the axis of symmetry of the lateral cross section. The centre of the circle defined by the radius of the second portion may lie on the axis of symmetry of the lateral cross section. The centre of the circle defined by the radius of the first portion may lie outside the circle defined by the radius of the second portion. Similarly, the centre of the circle defined by the radius of the second portion may lie outside the circle defined by the radius of the first portion.

The lateral cross section may have a maximum length of around 31.5mm. The maximum length of the lateral cross section may be between 16mm and 40mm. The maximum length of the lateral cross section may be between 25mm and 35mm.

The pin members may have a maximum width of around 31.5mm. The maximum width of the pin members may be between 16mm and 40mm. The maximum width of the pin members may be between 25mm and 35mm.

The lateral cross section may have a maximum height of around 27mm. The maximum height of the lateral cross section may be between 16mm and 40mm. The maximum height of the lateral cross section may be between 22mm and 32mm.

The pin members may have a maximum height of around 27mm. The maximum height of the pin members may be between 16mm and 40mm. The maximum height of the pin members may be between 25mm and 35mm.

The line joining the points where the length of the lateral cross section is at its maximum may be aligned with the axis of symmetry of the lateral cross section. The line joining the points where the height of the lateral cross section is at its maximum may be perpendicular to the axis of symmetry of the lateral cross section. The point where the line joining the points where the length of the lateral cross section is at its maximum and the line joining the points where the height of the lateral cross section is at its maximum intersect may be the centre point of the lateral cross section. This may be the centre point of each pin member.

The distance between the centre points of each lateral cross section of each pin member may be between 40mm and 200mm. The distance between the centre points of each lateral cross section of each pin member may be around 75mm. The distance between the centre points of each lateral cross section of each pin member may be around 85mm. The distance between the centre points of each lateral cross section of each pin member may be between 75mm and 85mm.

Each pin member may include a track plate link engaging portion. The track plate link engaging portion may be located on the inner surface, or inwardly facing surface, of the pin member. The track plate link engaging portions may be arranged such that they face one another. The track plate link engaging portions may have a partially cylindrical surface.

The track plate link engaging portion may be complementary in shape to the pin member engaging portion of the track plate link. The track plate link engaging portion may be at least partially complementary in shape to the pin member engaging portion of the track plate link. The track plate link engaging portion may have a portion that is at least partially complementary in shape with a portion of the pin member engaging portion of the track plate link.

The pin member engaging portion of the track plate link may have a concave portion. The concave portion may have a partially cylindrical surface.

The pin member engaging portion of the track plate link may include a longitudinal channel portion. At least a portion of the longitudinal channel portion may be at least partially complementary in shape with a portion of the track plate link engaging portion of the pin member. At least a portion of the longitudinal channel portion may be concave. The concave portion may have a partially cylindrical surface.

At least a portion of the pin member engaging portion of the track plate link may be complementary in shape to at least a portion of the first portion of the pin member.

The radius of the concave portion of the longitudinal channel may be substantially the same as the radius of the first portion of the lateral cross section of the pin member.

The radius of the concave portion of the longitudinal channel may have a radius between 8mm and 20mm. The radius of the concave portion of the longitudinal channel may be around 15mm. The radius of the concave portion of the longitudinal channel may be between 12.5mm and 17.5mm. The radius of the concave portion of the longitudinal channel may be 28mm. The radius of the concave portion of the longitudinal channel may be 26mm.

The pin member and the track plate link may be configured such that there is approximately a 90° contact area between the track plate link engaging portion and the pin member engaging portion, measured from the centre point of the radius engaging face of the pin member. The pin member and the track plate link may be configured such that there is between a 5° and a 180° contact area between the track plate link engaging portion and the pin member engaging portion, measured from the centre point of the radius engaging face of the pin member.

The track plate may comprise two track plate links. Each track plate link may be located at opposite ends of the track plate. Each track plate link may include two pin member engaging portions. The pin member engaging portions may be located at opposite ends of the track plate link.

In use, the link member may connect to adjacent track plate links. That is, a first pin member of a link member may be connected with a pin member engaging portion of a first track plate link and a second pin member of the link member may be connected with a pin member engaging portion of a second track plate link.

Each track plate link may be associated with two link members.

The track plate may include between one and four link members.

The track plate may include one or more track paws. Each track paw may be connected to the track plate links. The track paws being configured to at least partially house a tyre of a wheel vehicle when in use. The track plate may include a track paw at each end of the track plate. The track paws may be configured such that the oppose one another.

Embodiments the second aspect of the present invention may include one or more features of the first aspect of the present invention or their embodiments.

According to a third aspect of the present invention there is provided a continuous track system for a wheeled vehicle comprising:
a plurality of track plates, wherein each track plate includes two track plate links, the track plate links being located at opposite ends of the track plate; and
a plurality of link members for connecting adjacent track plate links together, each link member comprising:
   two side members; and
   two pin members,
   wherein the two side members oppose each other and are joined by the two pin members,
   wherein the link member is formed as a single piece,
   wherein the pin members are longitudinal members having an ovate lateral cross section, and
   wherein the lateral cross section of each pin member is substantially the same shape along the entire length of the pin..

Each track plate may be associated with four link members. Each track plate link may be associated with two link members.

Each link member may be moveably connected to the track plate link. Each link member may be connected to the track plate link such that the link member may pivot or rotate relative to the track plate link.

Each track plate link may include a pin member engaging portion. Each pin member engaging portion may be a hook or loop. Each pin member engaging portion may be hook shaped. Each hook or loop of the pin member engaging portion may include a generally U-shaped channel for receiving the pin member therein. Each hook or loop of the pin member engaging portion may include an elongate U-shaped channel portion.

Each pin member engaging portion may be configured such that, in use, the pin member of the link member is received therein and moves with respect thereto.

Each track plate link may be a longitudinal member having a lateral cross section that is C-shaped. Each track plate link may be a longitudinal member having a lateral cross section that is generally C-shaped.

Each track plate link may be around 20mm thick. Each track plate link may be between 10mm and 40mm thick.

Each pin member engaging portion may be provided in the lower or upper portion of the track plate link. Pin member engaging portions may be provided in the lower and upper portions of the track plate link. The pin member engaging portions may be located at opposite ends of the track plate link. Each track plate link may include two pin member engaging portions, such that two link members may be connected thereto.

Each link member may have a longitudinal axis and a lateral axis. Each link member may be symmetrical along the longitudinal and/or lateral axes. Alternatively, each link member may be symmetrical along the lateral axis and non-symmetrical along the longitudinal axis.

Each link member may be forged. Each link member may be a forged member. Each link member may be forged from steel. The steel may be a boron alloy steel.

The side members and the pin members may be arranged such that each link member is substantially square shaped in plan view.

Each link member may be between 40mm and 250mm long. Each link member may be around 123mm long. Each link member may be between 115mm and 130mm long. Each link member may be around 115mm long.

Each link member may be between 50mm and 120mm wide. Each link member may be around 90mm wide. Each link member may be between 85mm and 90mm wide.

Each link member may be between 25mm and 55mm tall. Each link member may be around 48mm tall. Each link member may be between 45mm and 55mm tall.

The side members may be substantially elongate planar members. Each side member may have a longitudinal axis.

The side members may be arranged to be parallel to one another.

The side members may be arranged to be substantially perpendicular to the pin members.

The side members may be identical. Alternatively, one side member may have a different length, width and/or height that the other side member. Each side member may have differently shaped outwardly facing surface.

The side members may have curved outwardly facing surface. At least a portion of the outwardly facing surface of the side member may be at least partially spherical in shape. One or more portions of the outwardly facing surface of the side members may be at least partially spherical in shape.

The side members may have substantially planar inwardly facing surfaces. The planes of the surfaces of the two side members may be parallel.

The side members may have bulbous portions or lobe portions located at each end thereof.

The outwardly facing surfaces and/or the inwardly facing surfaces of the side members may be smooth.

The side members may be between 40mm and 250mm long. The side members may be around 123mm long. The side members may be around 121mm long. The side members may be between 115mm and 130mm long.

One side member may be an inner side member and the other side member may be an outer side member. The outer side member may be longer than the inner side member. The outer side member may be taller than the inner side member. The outer side member may be thicker than the inner side member.

The inner side member may be between 40mm and 250mm long. The inner side member may be around 121mm long. The inner side member may be between 115mm and 127mm long.

The inner side member may be between 25mm and 55mm tall. The inner side member may be around 40mm tall. The inner side member may be between 35mm and 45mm tall.

The outer side member may be between 40mm and 250mm long. The outer side member may be around 123mm long. The outer side member may be between 115mm and 130mm long.

The outer side member may be between 25mm and 55mm tall. The outer side member may be around 48mm tall. The outer side member may be between 45mm and 55mm tall.

The distance between the inwardly facing surfaces of the side members may be between 40mm and 100mm. The distance between the inwardly facing surfaces of the side members may be around 52.5mm. The distance between the inwardly facing surfaces the side members may be between 50mm and 55mm.

The side members may have a height that is greater than the height, thickness, or width of the pin members.

At least one side member may include a flange surface. The flange surface may circumscribe an inwardly facing surface of the side member. Both side members may include a flange surface. Both flange surfaces may circumscribe an inwardly facing surface of the side member. The flange surface of the second side member may be larger than the flange surface of the first side member.

The lateral cross section of each pin member may be substantially the same shape along the entire length of the pin member.

The pin members may be substantially elongate members. Each pin member may have a longitudinal axis.

The pin members may be substantially parallel to one another.

The pin members may be arranged to be substantially perpendicular to the side members.

The pin members may be identical. Alternatively, the pin members may be differently shaped.

The outer surface of the pin members may be smooth.

The distance between the inwardly facing surfaces of the pin members may be between 40mm and 160mm. The distance between the inwardly facing surfaces of the pin members may be around 58mm. The distance between the inwardly facing surfaces the pin members may be between 55mm and 65mm.

The pin members may be between 40mm and 100mm long. The pin members may be around 52.5mm long. The pin members may be between 45mm and 60mm long.

The pin members may be arranged such that they join the side members at a location which is between the lowest portion and highest portion of the side member.

The pin members may have a lateral cross section with a single axis of symmetry.

The axis of symmetry of the lateral cross section of each pin member may be perpendicular to the longitudinal axis of the pin member.

The axis of symmetry of the lateral cross section of each pin member may be parallel to the longitudinal axis of each side member.

The axes of symmetry of the lateral cross sections of the pin members may be parallel.

The lateral cross section of each pin member includes a longitudinal axis and a lateral axis. The longitudinal axis is aligned with the axis of symmetry. The longitudinal axis is parallel to the axis of symmetry.

The lateral cross section may have a length in the direction of the longitudinal axis and a width in the direction of the lateral axis. The length of the lateral cross section may be greater than the width of the lateral cross section.

The lateral cross section of each pin member may have a first portion and a second portion. The first portion may be partially circular in shape. The second portion may be partially circular in shape. The first portion may have a first radius. The second portion may have a second radius. The first radius may be greater that the second radius. The pin member may thus have a partially cylindrical first portion and a partially cylindrical second portion.

The first radius of the first portion may be between 8mm and 20mm. The first radius of the first portion may be around 15mm. The first radius of the first portion may be between 12.5mm and 17.5mm.

The second radius of the second portion may be between 8mm and 20mm. The second radius of the second portion may be around 12.2mm. The second radius of the second portion may be between 12.5mm and 17.5mm.

The first portions of the lateral cross sections of each pin member may be arranged to face each other.

The first portions of the lateral cross sections of each pin member may face inwards and the second portions of the lateral cross sections of each pin member may face outwards.

The centre of the partial circle of the first portion of the lateral cross section may lie on the axis of symmetry of the lateral cross section. The centre of the partial circle of the second portion of the lateral cross section may lie on the axis of symmetry of the lateral cross section. The centres of the partial circles of the first and second portions of the lateral cross section may lie on the axis of symmetry of the lateral cross section. The centre of the partial circle defined by the radius of the first portion may lie outside the circle defined by the radius of the second portion. Similarly, the centre of the partial circle defined by the radius of the second portion may lie outside the circle defined by the radius of the first portion.

The centre of the circle defined by the radius of the first portion may lie on the axis of symmetry of the lateral cross section. The centre of the circle defined by the radius of the second portion may lie on the axis of symmetry of the lateral cross section. The centre of the circle defined by the radius of the first portion may lie outside the circle defined by the radius of the second portion. Similarly, the centre of the circle defined by the radius of the second portion may lie outside the circle defined by the radius of the first portion.

The lateral cross section may have a maximum length of around 31.5mm. The maximum length of the lateral cross section may be between 16mm and 40mm. The maximum length of the lateral cross section may be between 25mm and 35mm.

The pin members may have a maximum width of around 31.5mm. The maximum width of the pin members may be between 16mm and 40mm. The maximum width of the pin members may be between 25mm and 35mm.

The lateral cross section may have a maximum height of around 27mm. The maximum height of the lateral cross section may be between 16mm and 40mm. The maximum height of the lateral cross section may be between 22mm and 32mm.

The pin members may have a maximum height of around 27mm. The maximum height of the pin members may be between 16mm and 40mm. The maximum height of the pin members may be between 25mm and 35mm.

The line joining the points where the length of the lateral cross section is at its maximum may be aligned with the axis of symmetry of the lateral cross section. The line joining the points where the height of the lateral cross section is at its maximum may be perpendicular to the axis of symmetry of the lateral cross section. The point where the line joining the points where the length of the lateral cross section is at its maximum and the line joining the points where the height of the lateral cross section is at its maximum intersect may be the centre point of the lateral cross section. This may be the centre point of each pin member.

The distance between the centre points of each lateral cross section of each pin member may be between 40mm and 200mm. The distance between the centre points of each lateral cross section of each pin member may be around 75mm. The distance between the centre points of each lateral cross section of each pin member may be around 85mm. The distance between the centre points of each lateral cross section of each pin member may be between 75mm and 85mm.

Each pin member may include a track plate link engaging portion. The track plate link engaging portion may be located on the inner surface, or inwardly facing surface, of the pin member. The track plate link engaging portions may be arranged such that they face one another. The track plate link engaging portions may have a partially cylindrical surface.

The track plate link engaging portion may be complementary in shape to the pin member engaging portion of the track plate link. The track plate link engaging portion may be at least partially complementary in shape to the pin member engaging portion of the track plate link. The track plate link engaging portion may have a portion that is at least partially complementary in shape with a portion of the pin member engaging portion of the track plate link.

The pin member engaging portion of the track plate link may have a concave portion. The concave portion may have a partially cylindrical surface.

The pin member engaging portion of each track plate link may include a longitudinal channel portion. At least a portion of the longitudinal channel portion may be at least partially complementary in shape with a portion of the track plate link engaging portion of each pin member. At least a portion of the longitudinal channel portion may be concave. The concave portion may have a partially cylindrical surface.

At least a portion of the pin member engaging portion of each track plate link may be complementary in shape to at least a portion of the first portion of each pin member.

The radius of the concave portion of the longitudinal channel may be substantially the same as the radius of the first portion of the lateral cross section of the pin member.

The at least a portion of the pin member engaging portion may have a partially cylindrical surface, the radius of which is substantially the same as the radius of the first portion of the lateral cross section of each pin member.

The radius of the concave portion of the longitudinal channel may have a radius between 8mm and 20mm. The radius of the concave portion of the longitudinal channel may be around 15mm. The radius of the concave portion of the longitudinal channel may be between 12.5mm and 17.5mm. Each pin member and each track plate link may be configured such that there is approximately a 90° contact area between the track plate link engaging portion and the pin member engaging portion, measured from the centre point of radius engaging face of the pin member. Each pin member and each track plate link may be configured such that there is between a 5° and a 180° contact area between the track plate link engaging portion and the pin member engaging portion, measured from the centre point of radius engaging face of the pin member.

Each track plate may comprise two track plate links. Each track plate link may be located at opposite ends of the track plate. Each track plate link may include two pin member engaging portions. The pin member engaging portions may be located at opposite ends of the track plate link.

In use, the link member may connect to adjacent track plate links. That is, a first pin member of a link member may be connected with a pin member engaging portion of a first track plate link and a second pin member of the link member may be connected with a pin member engaging portion of a second track plate link.

The track plate may include one or more track paws. Each track paw may be connected to the track plate links. The track paws being configured to at least partially house a wheel of a wheel vehicle when in use. The track plate may include a track paw at each end of the track plate. The track paws may be configured such that the oppose one another.

Embodiments the third aspect of the present invention may include one or more features of the first or second aspects of the present invention or their embodiments.

### Brief description of the drawings

Embodiment of the present invention will now be described, by way of example, with reference to the drawings, in which:
Fig. 1 is a perspective view of a continuous track system according to the present invention;
Fig. 2 is a schematic side view of the track system of Fig. 1;
Fig. 3 is a partial side view of the track system of Fig. 1;
Fig. 4a is side view of a track plate according to the present invention;
Fig. 4b is a plan view of two joined track plates of Fig. 4a;
Fig. 5a is a perspective view of a link member according to the present invention;
Fig. 5b is a plan view of the link member of Fig. 5a;
Fig. 5c is a side view of the link member of Fig. 5a;
Fig. 5d is a cross sectional view along section A-A of Fig. 5b;
Fig. 5e is a cross sectional end along section B-B of Fig. 5b;
Fig. 5f is an end view of the link member of Fig. 5a; and
Fig. 6 is a schematic in use side view of the link member of Fig. 5a.

### Description of preferred embodiments

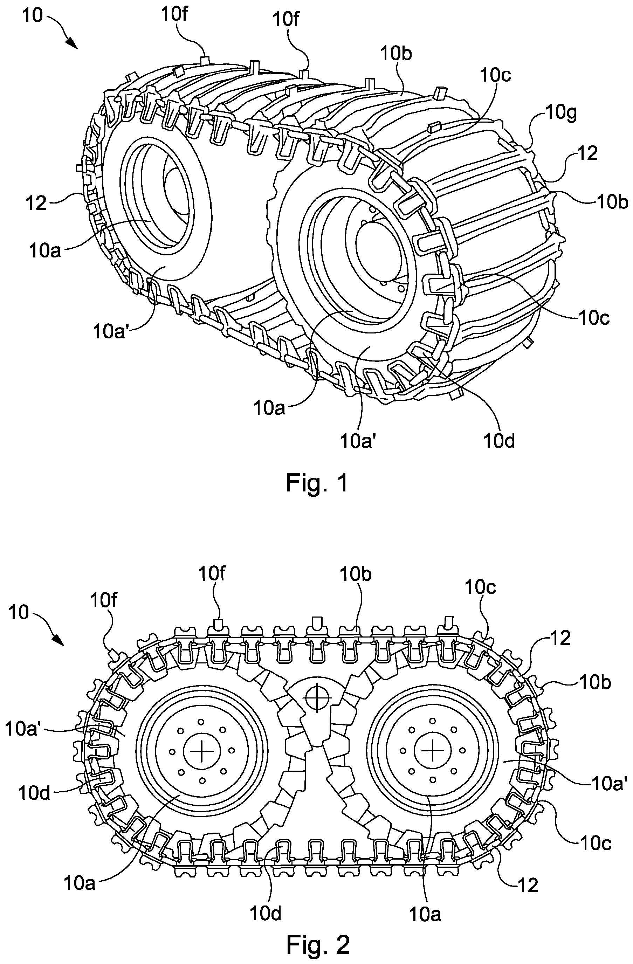

With reference to Figs 1 to 4b a continuous track system 10 is illustrated. In the embodiment illustrated and described here the track system 10 is fitted to two-wheels 10a of a four-wheeled vehicle. However, it should be appreciated that the track system 10 may be suitable for use with a vehicle with a greater number of wheels, or a different arrangement of wheels. The track system 10 is made up of a number of track plates 10b, track plate links 10c, track paws 10d and link members 12.

The track plates 10b may be shaped to suit the particular use of the track system 10, i.e. the type of ground and expected weather conditions where the track system 10 will be used. Each track plate 10 may also include one or more spikes 10f (anti-skid spikes).

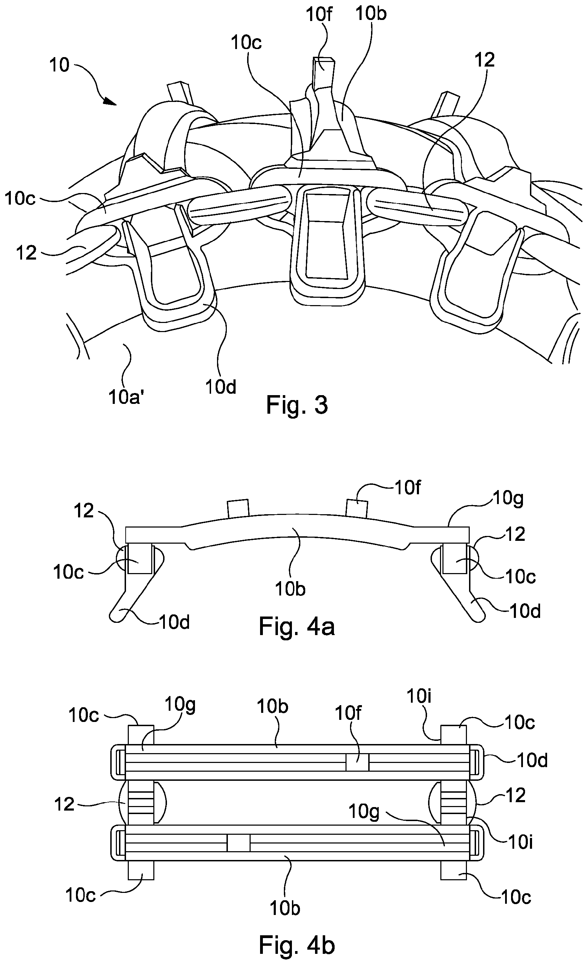

As best illustrated in Figs. 3, 4a and 4b, each track plate 10b includes two track plate links 10c, each track plate link 10c being attached at an end portion 10g of the track plate 10b. The track plate links 10c are typically welded to the track plate 10b.

The track paws 10d are used to retain the wheels 10a within the track system 10 when in use. As best illustrated in Figs. 3, 4a and 4b, each track plate 10b includes two track paws 10d, each track paw 10d being attached at an end portion 10g of the track plate 10b. The track paws 10d are also attached to the track plate link 10c. The track paws 10d are typically welded to the track plate 10b and the track plate link 10c. The track paws 10d are typically welded to the track plate link 10c in a gap between two pin member engaging portions 10i.

The link members 12 are used to connect adjacent track plates 10b together. The link members 12 achieve this by engaging with the track plate links 10c. Each track plate 10b is associated with four link members 12, each track plate link 10c being associated with a pair of link members 12. As described further below, each link member 12 is moveably connected to the track plate link 10c such that the link member 12 can pivot or rotate relative to the track plate 10b and track plate link 10c.

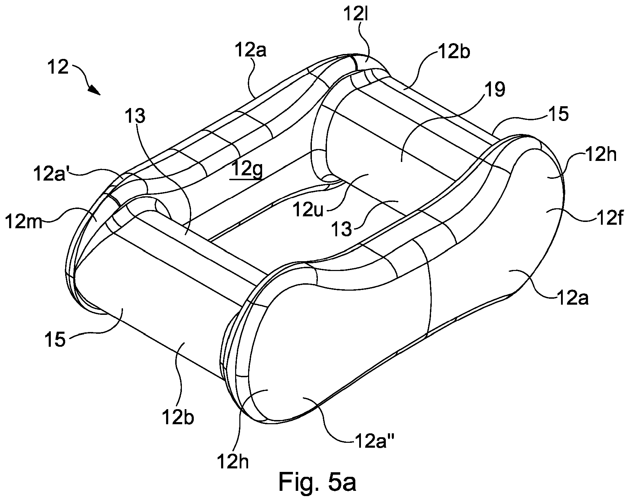

The link member 12 forms part of the present invention and is illustrated in more detail in Figs. 5a to 5f.

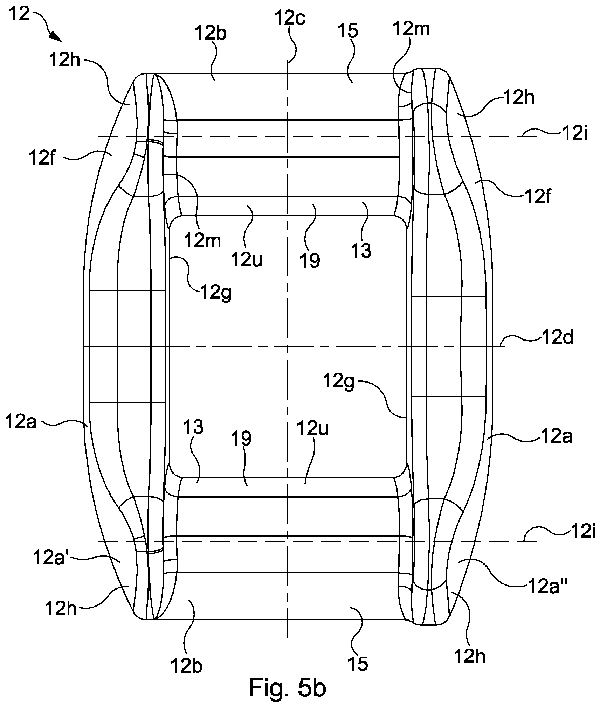

The link member 12 comprises two side members, or flanges, 12a and two pin members 12b. As best illustrated in Fig. 5b, the link member 12 is arranged such that the two side members 12a oppose each other and are joined together by the two pin members 12b.

The link member 12 is typically forged from steel as a single piece. The steel may be a boron alloy steel. However, it should be appreciated that other materials may be used depending on the requirements of the link member 12 and the track system 10.

As best illustrated in Fig. 5b, the side members 12a and the pin members 12b are arranged such that the link member 12 is substantially square shaped in plan view. Here the side members 12a are arranged to be substantially perpendicular to the pin members 12b. The link member 12 has a longitudinal axis 12c and a lateral axis 12d. In the embodiment illustrated and described here the link member 12 is symmetrical along the lateral axis 12d. The link member 12 may also be symmetrical along the longitudinal axis 12c. Where the link member 12 is symmetrical along the longitudinal axis 12c, the side members 12a would be identical.

The link member 12 may be between 40mm and 250mm long, between 50mm and 120mm wide and between 25mm and 55mm tall. The exact size of the link member 12 may be dependent on the type of track system required and the use thereof.

As best illustrated in Figs. 5a and 5b, the side members 12a are substantially elongate planar members and are arranged to be parallel to one another. Each side member 12a includes a longitudinal axis 12e.

The link member 12 includes a first side member 12a' and a second side member 12a". The first side member 12a' may be an inner side member and the second side member 12a" may be an outer side member. The first side member 12a' is arranged to be closer to the tyre 10a' that the second side member 12a".

In the embodiment illustrated and described here the first side member 12a' and the second side member 12a" are non-identical, as described further below. However, it should be appreciated that the first side member 12a' and the second side member 12a" may be identical.

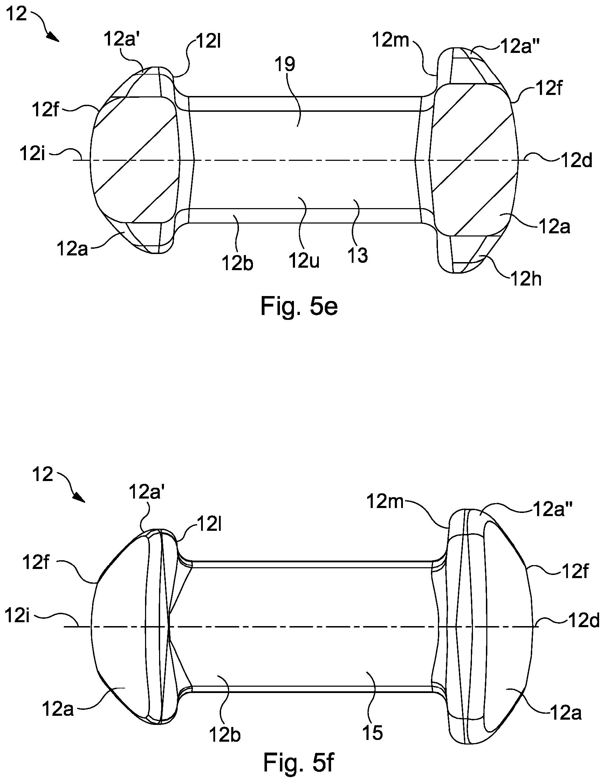

As best illustrated in Figs. 5b, 5e and 5f, each side member 12a may have a curved outwardly facing surface 12f and a substantially planar inwardly facing surface 12g. Each curved outwardly facing surface 12f may have one or more portions that are partially spherical in shape. The planes of the planar inwardly facing surfaces 12g are substantially parallel. The curved outwardly facing surfaces 12f and the planar inwardly facing surfaces 12g are smooth to prevent excessive wear on the tyre 10a' of the wheel 10a. It should be appreciated that the inwardly facing surfaces 12g may not be exactly planar and may have a low apex that runs parallel to the longitudinal axis thereof. That is, inwardly facing surfaces 12g may have a 6° draft angle. The draft angle may also be between 3° and 9°. This is a result of the forging process.

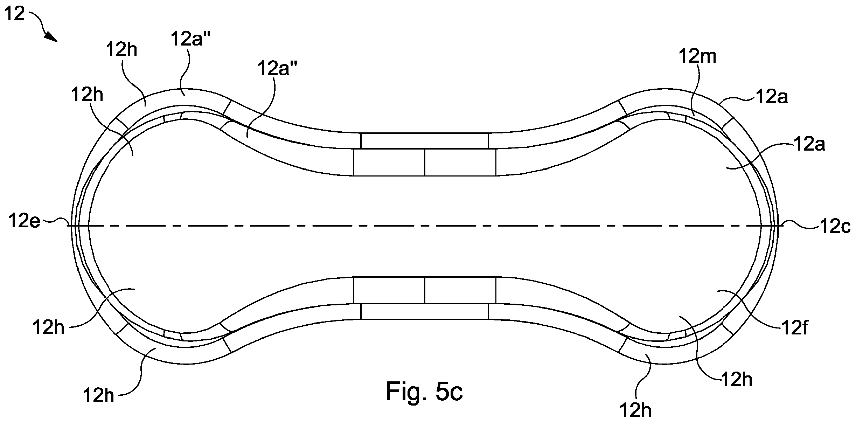

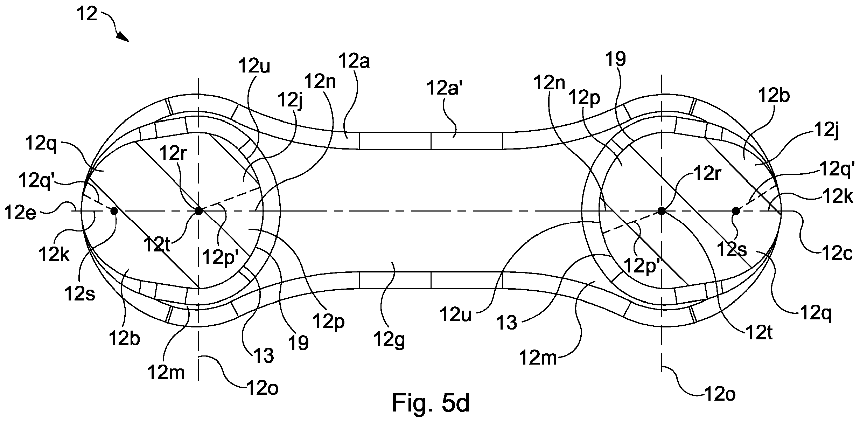

With reference to Figs. 5a, 5c and 5d, the side members 12a have bulbous portions, or lobes 12h, located at each end thereof.

As best illustrated in Figs. 5a, 5e and 5f, the second side member 12a" has different dimensions compared to the first side member 12a'. In the embodiment illustrated and described here the second side member 12a" is taller than the first side member 12a'. The second side member 12a" has a height of 48.0mm, compared to a height of 40.0mm of the first side member 12a'. Providing a link member 12 that has a larger outer side member than an inner side member reduces the risk of the link member 12 twisting relative to the track plate link 10c. That is, the larger outer side member has a greater area of contact with the track plate link 10c, which prevents the link member 12 from twisting. Preventing the link member 12 from twisting ensures that the only the pin members 12b of the link member 12 engage with the track plate link 10c and not any other part of the link member 12, i.e. that the link runs true throughout its life.

In the embodiment illustrated and described here the first side member 12a' is 121.0mm long and the second side member 12a" is 123.3mm long.

The distance between the inwardly facing surfaces 12g of the side members 12a are 52.5mm.

As illustrated in Figs. 5e and 5f, the side members 12a have a height that is greater than the thickness, or width, of the pin members 12b.

However, it should be appreciated that the dimensions of the side members 12a may be configured or altered to suit requirements of use of the link member 12 and the track system 10.

As best illustrated in Figs. 5b, 5e and 5f, the pin members 12b are longitudinal, or elongate, members having a longitudinal axis 12i. The pin members 12b are arranged to be substantially parallel to one another and substantially perpendicular to the side members 12a.

As best illustrated in Figs. 5e and 5f, the pin members 12b are arranged such that they join the side members 12a at a location which is between the lowest portion and the highest portion of the side member 12a. The effect of this is that it allows the side members 12a to be flanges, with shoulder portions 121. The shoulder portions 121 create a flange surface 12m which circumscribes the inwardly facing surface 12g of each side member 12a. In use, the flange surfaces 12m may contact the track plate link 10c and limit the lateral movement thereof. The flange surfaces 12m also prevent twisting of the link members 12a when in use. The flange surface 12m of the second side member 12a" is larger than the flange surface 12 of the first side member 12a'.

As best illustrated in Fig. 5d, the pin members 12b have a lateral cross section 12j. The lateral cross section 12j has a single axis of symmetry 12k. As best illustrated in Figs. 5d and 5e, the axis of symmetry 12k of the lateral cross section 12j of each pin member 12b is perpendicular to the longitudinal axis 12i of the pin member 12b and parallel to the longitudinal axis 12c of the side members 12a. The axes of symmetry 12k of the lateral cross sections 12j of each pin member 12b are also parallel.

As best illustrated in Fig. 5d, the lateral cross section 12j of each pin member 12b is generally ovate in shape. That is, the lateral cross section 12j of each pin member 12b has a shape that resembles, or is at least similar to, the longitudinal section of an ovoid. It should be appreciated that the lateral cross section 12j of each pin member 12b may not necessarily exactly match the shape of an ovate, or the longitudinal section of an ovoid.

The lateral cross section 12j of each pin member 12b is substantially the same shape along the entire length of the pin member 12b. The pin members 12b are therefore in the shape of extended ovates. Furthermore, the pin members 12b are substantially identical in shape.

Again as best illustrated in Fig. 5d, the lateral cross section 12j has a longitudinal axis 12n, which is aligned with the axis of symmetry 12k, and a lateral axis 12o that is perpendicular to the longitudinal axis 12n. The lateral cross section 12j has a length in the direction of the longitudinal axis 12n and a width in the direction of the lateral axis 12o. The length of the lateral cross section 12j is greater than the width of the lateral cross section 12j. The maximum length of the lateral cross section 12j is greater than the maximum width of the lateral cross section 12j.

The lateral cross section 12j of each pin member 12b has a first portion 12p and a second portion 12q. The first and second portions 12p and 12q are partially circular in shape. The partial circle of the first portion 12p has a first radius 12p' and the partial circle of the second portion 12q has a second radius 12q', the first radius 12p' being larger than the second radius 12q'. The first radius 12p' may be 15mm and the second radius 12q' may be 12.2mm. However, it should be appreciated that these radii may be different depending on the requirements of the link member 12 and use of the track system 10. Each pin member 12b may thus have a partially cylindrical first portion 13 and a partially cylindrical second portion 15.

The centre 12r of the circle defined by the radius 12p' of the first portion 12p lies on the axis of symmetry 12k of the lateral cross section 12j. The centre 12s of the circle defined by the radius 12q' of the second portion 12q lies on the axis of symmetry 12k of the lateral cross section 12j. The centre 12r of the circle defined by the radius 12p' of the first portion 12p lies outside the circle defined by the radius 12q' of the second portion 12q. Similarly, the centre 12s of the circle defined by the radius 12q' of the second portion 12q lies outside the circle defined by the radius 12p' of the first portion 12p.

In the embodiment illustrated and described here the lateral cross section 12j has a maximum length of 31.5mm and a maximum width of 27mm. However, it should be appreciated that the length and width may be different depending on the requirements of the link member 12 and use of the track system 10.

Furthermore, the line joining the points where the length of the lateral cross section 12j is at its maximum is aligned with the axis of symmetry 12k of the lateral cross section 12j and the line joining the points where the width of the lateral cross section 12j is at its maximum is perpendicular to the axis of symmetry 12k of the lateral cross section 12j. The point where the line joining the points where the length of the lateral cross section 12j is at its maximum and the line joining the points where the width of the lateral cross section 12j is at its maximum intersect may be the centre point 12t of the lateral cross section 12j. This may be the centre point of each pin member 12b. The distance between centre points 12t of each pin member is 85mm.

The distance between the inwardly facing surfaces 12g of the pin members 12b is 58mm. Furthermore, the pin members 12b are 52.5mm long. However, it should be appreciated that this dimension may be different depending on the requirements of the link member 12 and use of the track system 10.

As best illustrated in Fig. 5d, the first portions 12p of the pin members 12b are arranged to face each other. That is, the first portions 12p of the pin members 12b face inwards and the second portions 12q of the pin members 12b face outwards.

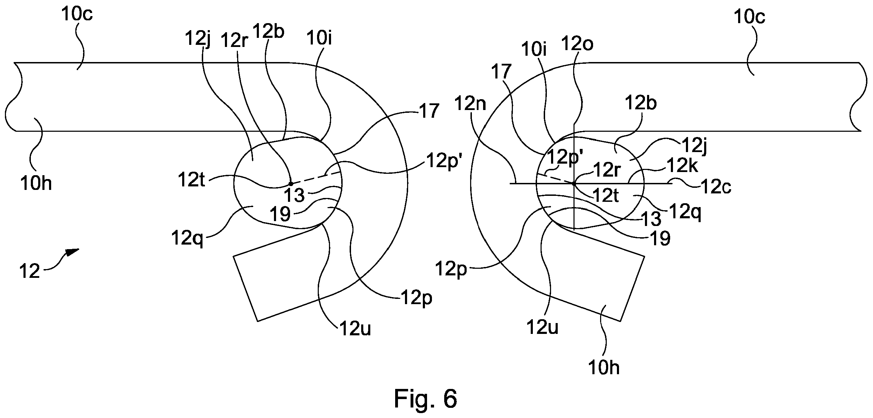

With reference to Fig. 6 the link member 12 is illustrated schematically in use with a track plate link 10c. It should be appreciated that only the lateral cross sections 12j of the pin members 12b of the link member 12 have been illustrated for clarity. As is known with continuous track systems, the link members 12 are arranged with the track plate links 10c to allow respective movement between each link member 12 and each track plate link 10c.

As illustrated, the track plate link 10c is a longitudinal member having a lateral cross section 10h that is C-shaped. The thickness of each track plate link 10c is 20mm.

Each track plate link 10c includes a pin member engaging portion 10i. The pin member engaging portion 10i is an elongate U-shaped channel portion. As illustrated, the pin member engaging portions 10i are located at opposite ends of the track plate link 10c. Therefore, each track plate link 10c includes two pin member engaging portions 10i.

The pin member engaging portions 10i are thus concave with a partially cylindrical surface 17. The radius of the partially cylindrical surface 17 is configured to substantially match the radius 12p' of the first portion 12p of the lateral cross section 12j and partially cylindrical first portion 13 of the pin member 12b. The partially cylindrical surface 17 of the pin member engaging portions 10h is thus complimentary in shape to the partially cylindrical first portion 13 of the pin members 12b.

The partially cylindrical first portion 13 of each pin member 12b includes track plate link engaging portions 12u. The track plate link engaging portions 12u thus face the pin member engaging portions 10i.

The track plate link engaging portions 12u therefore have a partially cylindrical surface 19. The radius of the partially cylindrical surface 19 is configured to substantially match the radius of the partially cylindrical surface 17 of the pin member engaging portions 10i. The track plate link engaging portions 12u are thus complementary in shape to the pin member engaging portions 10i of the track plate link 10c.

The radius of the partially cylindrical surface 17 of the pin member engaging portions 10i is 15mm and the radius of the partially cylindrical surface 19 of the track plate link engaging portions 12u is 15mm. However, it should be appreciated that the radii may be different depending on the requirements of the link member 12 and use of the track system 10.

Each pin member 12b and each track plate link 10c are configured such that there is approximately a 90° contact area between the track plate link engaging portion 12u and the pin member engaging portion 10i, measured from the centre point 12t of the pin member 12b.

As illustrated in Fig. 6, the link members 12b connect adjacent track plate links 10c together. That is, a first pin member 12b of a link member 12 is connected with a pin member engaging portion 10i of a first track plate link 10c and a second pin member 12b of the link member 12 is connected with a pin member engaging portion 10i of a second track plate link 10c.

Providing a link member 12 for a continuous track system as described above reduces the amount of re-tensioning required to be carried out for new track systems.

Providing a link member 12 having pin members 12b having a lateral cross section 12j as described above ensures that the track plate link engaging portions 12u, and the pin members 12b, are complimentary in shape to the pin member engaging portions 10i of the track pate links 10c.

In the embodiment illustrated and described here the radius of the partially cylindrical surface 19 of the track plate link engaging portions 12u of the pin members 12b are configured to match the radius of the partially cylindrical surface 17 of the pin member engaging portions 10i of the track plate links 10c. Matching the radii almost eliminates the bedding in period and results in less frequent re-tensioning.

The present invention also provides an increased contact area between the track plate link engaging portion 12u and the pin member engaging portion 10i. Increasing this contact area also reduces the high initial wear period, which results in a longer life of the component.

Furthermore, providing a link member 12 whereby the length of the lateral cross section 12j is greater than the width of the lateral cross section 12j maximises material across the critical wear point of the link member 12, which increases the lifespan of the member.

Providing a link member 12, a track plate 10b and a continuous track system 10 according to the present invention reduces the amount of re-tensioning required.

Modifications and improvements may be made to the above without departing from the scope of the present invention as defined by the appended claims.

Furthermore, although the link member 12 has been illustrated and described above as having a first side member 12a' and a second side member 12a", the first and second side members 12a' and 12a" having different dimensions, it should be appreciated that the first and second side members 12a' and 12a" may be identical.

## Claims

1. A link member (12) for linking two track plates (10b) of a continuous track system (10) for a wheeled vehicle comprising:
two side members (12a); and
two pin members (12b),
wherein the two side members (12a) oppose each other and are joined by the two pin members (12b),
wherein the link member (12) is formed as a single piece,
wherein the pin members (12b) are longitudinal members having an ovate lateral cross section, and
wherein the lateral cross section of each pin member (12b) is substantially the same shape along the entire length of the pin.

2. The link member of claim 1, wherein the lateral cross section of each pin member (12b) has a single axis of symmetry (12k).

3. The link member (12) of claim 2, wherein the axis of symmetry (12k) of the lateral cross section of each pin member (12b) is perpendicular to the longitudinal axis (12i) of the pin member (12b) and parallel to the longitudinal axis (12c) of each side member (12a), and wherein the axes of symmetry (12k) of the lateral cross sections of the pin members (12b) are parallel.

4. The link member (12) of any claim 2 or claim 3, wherein the lateral cross section of each pin member (12b) includes a longitudinal axis (12n) and a lateral axis (12o), the longitudinal axis (12n) being aligned with the axis of symmetry (12k).

5. The link member (12) of claim 4, wherein the lateral cross section has a length in the direction of the longitudinal axis (12n) and a width in the direction of the lateral axis (12o), the length of the lateral cross section being greater than the width of the lateral cross section.

6. The link member (12) of any preceding claim, wherein the lateral cross section of each pin member (12b) has a first portion (12p) and a second portion (12q), the first portion (12p) being partially circular in shape.

7. The link member (12) of claim 6, wherein the second portion (12q) is partially circular in shape.

8. The link member (12) of claim 6 or claim 7, wherein the first portion (12p) of the pin member (12b) has a first radius (12p') and the second portion (12q) of the pin member (12b) has a second radius (12q'), the first radius (12p') being greater that the second radius (12q').

9. The link member (12) of claim 8, wherein the pin member (12b) has a partially cylindrical first portion (13) and a partially cylindrical second portion (15).

10. The link member (12) of any of claims 6 to 9, wherein the first portions (12p) of the lateral cross sections of each pin member (12b) are arranged to face each other.

11. The link member (12) of any of claims 6 to 10, when dependent upon any of claims 2 to 5, wherein the centre of the partial circle of the first portion (12p) of the lateral cross section lies on the axis of symmetry (12k) of the lateral cross section.

12. The link member (12) of any of claims 7 to 11, wherein the centre of the partial circle of the second portion (12p) of the lateral cross section lies on the axis of symmetry (12k) of the lateral cross section.

13. The link member (12) of any of claims 7 to 12, wherein the centre of the partial circle defined by the radius (12p') of the first portion (12p) lies outside the circle defined by the radius (12q') of the second portion (12q) and the centre of the partial circle defined by the radius (12q') of the second portion (12q) lies outside the circle defined by the radius (12p') of the first portion (12p).

14. A continuous track system (10) for a wheeled vehicle comprising:
a plurality of track plates (10b), wherein each track plate (10b) includes two track plate links (10c), the track plate links (10c) being located at opposite ends of the track plate (10b); and
a plurality of link members (12) for connecting adjacent track plate links (10c) together, each link member (12) comprising:
two side members (12a); and
two pin members (12b),
wherein the two side members (12a) oppose each other and are joined by the two pin members (12b),
wherein the link member (12) is formed as a single piece,
wherein the pin members (12) are longitudinal members having an ovate lateral cross section, and
wherein the lateral cross section of each pin member (12b) is substantially the same shape along the entire length of the pin.

15. A track plate (10b) for a continuous track system (10) for a wheeled vehicle comprising:
a track plate link (10c), the track plate link (10c) being attached to the track plate (10b); and
a link member (12), for connecting the track plate link (10c) to an adjacent track plate link (10c), the link member (12) comprising:
two side members (12a); and
two pin members (12b),
wherein the two side members (12a) oppose each other and are joined by the two pin members (12b),
wherein the link member (12) is formed as a single piece,
wherein the pin members (12b) are longitudinal members having an ovate lateral cross section, and
wherein the lateral cross section of each pin member (12b) is substantially the same shape along the entire length of the pin.

## Patentansprüche

1. Verbindungselement (12) zum Verbinden zweier Gleisplatten (10b) eines Gleiskettensystems (10) für ein Radfahrzeug, das umfasst:
zwei Seitenelemente (12a); und
zwei Stiftelemente (12b),
wobei die zwei Seitenelemente (12a) einander entgegengesetzt sind und von den zwei Stiftelementen (12b) verbunden sind,
wobei das Verbindungselement (12) als ein einziges Teil gebildet ist,
wobei die Stiftelemente (12b) Längselemente sind, die einen ovoiden seitlichen Querschnitt aufweisen, und
wobei der seitliche Querschnitt jedes Stiftelements (12b) im Wesentlichen die gleiche Form entlang der gesamten Länge des Stifts aufweist.

2. Verbindungselement nach Anspruch 1, wobei der seitliche Querschnitt jedes Stiftelements (12b) eine einzige Symmetrieachse (12k) aufweist.

3. Verbindungselement (12) nach Anspruch 2, wobei die Symmetrieachse (12k) des seitlichen Querschnitts jedes Stiftelements (12b) zu der Längsachse (12i) des Stiftelements (12b) senkrecht und zu der Längsachse (12c) jedes Seitenelements (12a) parallel ist, und wobei die Symmetrieachsen (12k) der seitlichen Querschnitte der Stiftelemente (12b) parallel sind.

4. Verbindungselement (12) nach Anspruch 2 oder Anspruch 3, wobei der seitliche Querschnitt jedes Stiftelements (12b) eine Längsachse (12n) und eine seitliche Achse (12o) aufweist, wobei die Längsachse (12n) mit der Symmetrieachse (12k) ausgerichtet ist.

5. Verbindungselement (12) nach Anspruch 4, wobei der seitliche Querschnitt eine Länge in die Richtung der Längsachse (12n) und eine Breite in die Richtung der seitlichen Achse (12o) aufweist, wobei die Länge des seitlichen Querschnitts größer ist als die Breite des seitlichen Querschnitts.

6. Verbindungselement (12) nach einem vorstehenden Anspruch, wobei der seitliche Querschnitt jedes Stiftelements (12b) einen ersten Abschnitt (12p) und einen zweiten Abschnitt (12q) aufweist, wobei der erste Abschnitt (12p) teilweise kreisförmig ist.

7. Verbindungselement (12) nach Anspruch 6, wobei der zweite Abschnitt (12q) teilweise kreisförmig ist.

8. Verbindungselement (12) nach Anspruch 6 oder Anspruch 7, wobei der erste Abschnitt (12p) des Stiftelements (12b) einen ersten Radius (12p') aufweist, und der zweite Abschnitt (12q) des Stiftelements (12b) einen zweiten Radius (12q') aufweist, wobei der erste Radius (12p') größer ist als der zweite Radius (12q').

9. Verbindungselement (12) nach Anspruch 8, wobei das Stiftelement (12b) einen teilweise zylindrischen ersten Abschnitt (13) und einen teilweise zylindrischen zweiten Abschnitt (15) aufweist.

10. Verbindungselement (12) nach einem der Ansprüche 6 bis 9, wobei die ersten Abschnitte (12p) der seitlichen Querschnitte jedes Stiftelements (12b) eingerichtet sind, um einander zugewandt zu sein.

11. Verbindungselement (12) nach einem der Ansprüche 6 bis 10, wenn abhängig von einem der Ansprüche 2 bis 5, wobei die Mitte des Teilkreises des ersten Abschnitts (12p) des seitlichen Querschnitts auf der Symmetrieachse (12k) des seitlichen Querschnitts liegt.

12. Verbindungselement (12) nach einem der Ansprüche 7 bis 11, wobei die Mitte des Teilkreises des zweiten Abschnitts (12p) des seitlichen Querschnitts auf der Symmetrieachse (12k) des seitlichen Querschnitts liegt.

13. Verbindungselement (12) nach einem der Ansprüche 7 bis 12, wobei die Mitte des Teilkreises, der von dem Radius (12p') des ersten Abschnitts (12p) definiert ist, außerhalb des Kreises liegt, der von dem Radius (12q') des zweiten Abschnitts (12q) definiert ist, und die Mitte des Teilkreises, die von dem Radius (12q') des zweiten Abschnitts (12q) definiert ist, außerhalb des Kreises liegt, der von dem Radius (12p') des ersten Abschnitts (12p) definiert ist.

14. Gleiskettensystem (10) für ein Radfahrzeug, das umfasst:
eine Vielzahl von Gleisplatten (10b), wobei jede Gleisplatte (10b) zwei Gleisplattenverbindungen (10c) beinhaltet, wobei die Gleisplattenverbindungen (10c) an entgegengesetzten Enden der Gleisplatte (10b) liegen; und
eine Vielzahl von Verbindungselementen (12) zum Verbinden aneinandergrenzender Gleisplattenverbindungen (10c) miteinander, wobei jedes Verbindungselement (12) umfasst:
zwei Seitenelemente (12a); und
zwei Stiftelemente (12b),
wobei die zwei Seitenelemente (12a) einander entgegengesetzt sind und von den zwei Stiftelementen (12b) verbunden sind,
wobei das Verbindungselement (12) als ein einziges Teil gebildet ist,
wobei die Stiftelemente (12) Längselemente sind, die einen ovoiden seitlichen Querschnitt aufweisen, und
wobei der seitliche Querschnitt jedes Stiftelements (12b) im Wesentlichen die gleiche Form entlang der gesamten Länge des Stifts aufweist.

15. Gleisplatte (10b) für ein Gleiskettensystem (10) für ein Radfahrzeug, die umfasst:
eine Gleisplattenverbindung (10c), wobei die Gleisplattenverbindung (10c) an der Gleisplatte (10b) angebracht ist; und
ein Verbindungselement (12) zum Verbinden der Gleisplattenverbindung (10c) mit einer angrenzenden Gleisplattenverbindung (10c), wobei das Verbindungselement (12) umfasst:
zwei Seitenelemente (12a); und
zwei Stiftelemente (12b),
wobei die zwei Seitenelemente (12a) einander entgegengesetzt sind und von den zwei Stiftelementen (12b) verbunden sind,
wobei das Verbindungselement (12) als ein einziges Teil gebildet ist,
wobei die Stiftelemente (12b) Längselemente sind, die einen ovoiden seitlichen Querschnitt aufweisen, und
wobei der seitliche Querschnitt jedes Stiftelements (12b) im Wesentlichen die gleiche Form entlang der gesamten Länge des Stifts aufweist.

## Revendications

1. Élément formant maillon (12) pour lier des patins (10b) d'un système de chenille continue (10) pour un véhicule sur roues comprenant :
deux éléments latéraux (12a) ; et
deux éléments tiges (12b),
dans lequel les deux éléments latéraux (12a) sont mutuellement opposés et sont liés par les deux éléments tiges (12b),
dans lequel l'élément formant maillon (12) est formé d'un seul tenant,
dans lequel les éléments tiges (12b) sont des éléments longitudinaux présentant une section transversale latérale ovoïde, et
dans lequel la section transversale latérale de chaque élément tige (12b) est sensiblement de la même forme sur toute la longueur de la tige.

2. Élément formant maillon selon la revendication 1, dans lequel la section transversale latérale de chaque élément tige (12b) présente un axe unique de symétrie (12k).

3. Élément formant maillon (12) selon la revendication 2, dans lequel l'axe de symétrie (12k) de la section transversale latérale de chaque élément tige (12b) est perpendiculaire à l'axe longitudinal (12i) de chaque élément tige (12b) et parallèle à l'axe longitudinal (12c) de chaque élément latéral (12a), et dans lequel les axes de symétrie (12k) des sections transversales latérales des éléments tiges (12b) sont parallèles.

4. Élément formant maillon (12) selon une quelconque revendication 2 ou revendication 3, dans lequel la section transversale latérale de chaque élément tige (12b) inclut un axe longitudinal (12n) et un axe latéral (12o), l'axe longitudinal (12n) étant aligné sur l'axe de symétrie (12k).

5. Élément formant maillon (12) selon la revendication 4, dans lequel la section transversale latérale présente une longueur dans la direction de l'axe longitudinal (12n) et une largeur dans la direction de l'axe latéral (12o), la longueur de la section transversale latérale étant supérieure à la largeur de la section transversale latérale.

6. Élément formant maillon (12) selon une quelconque revendication précédente, dans lequel la section transversale latérale de chaque élément tige (12b) présente une première partie (12p) et une seconde partie (12q), la première partie (12p) étant de forme partiellement circulaire.

7. Élément formant maillon (12) selon la revendication 6, dans lequel la seconde partie (12q) est de forme partiellement circulaire.

8. Élément formant maillon (12) selon la revendication 6 ou la revendication 7, dans lequel la première partie (12p) de l'élément tige (12b) présente un premier rayon (12p') et la seconde partie (12q) de l'élément tige (12b) présente un second rayon (12q'), le premier rayon (12p') étant supérieur au second rayon (12q').

9. Élément formant maillon (12) selon la revendication 8, dans lequel l'élément tige (12b) présente une première partie partiellement cylindrique (13) et une seconde partie partiellement cylindrique (15).

10. Élément formant maillon (12) selon l'une quelconque des revendications 6 à 9, dans lequel les premières parties (12p) des sections transversales latérales de chaque élément tige (12b) sont agencées pour se faire face mutuellement.

11. Élément formant maillon (12) selon l'une quelconque des revendications 6 à 10, lorsqu'elles dépendent de l'une quelconque des revendications 2 à 5, dans lequel le centre du cercle partiel de la première partie (12p) de la section transversale latérale repose sur l'axe de symétrie (12k) de la section transversale latérale.

12. Élément formant maillon (12) selon l'une quelconque des revendications 7 à 11, dans lequel le centre du cercle partiel de la seconde partie (12p) de la section transversale latérale repose sur l'axe de symétrie (12k) de la section transversale latérale.

13. Élément formant maillon (12) selon l'une quelconque des revendications 7 à 12, dans lequel le centre du cercle partiel défini par le rayon (12p') de la première partie (12p) repose à l'extérieur du cercle défini par le rayon (12q') de la seconde partie (12q) et le centre du cercle partiel défini par le rayon (12q') de la seconde partie (12q) repose à l'extérieur du cercle défini par le rayon (12p') de la première partie (12p).

14. Système de chenille continue (10) pour un véhicule sur roues comprenant :
une pluralité de patins (10b), dans lequel chaque patin (10b) inclut deux maillons de patin (10c), les maillons de patin (10c) étant situés au niveau d'extrémités opposées du patin (10b) ; et
une pluralité d'éléments formant maillon (12) pour lier des maillons de patin adjacents (10c) l'un à l'autre, chaque élément formant maillon (12) comprenant :
deux éléments latéraux (12a) ; et
deux éléments tiges (12b),
dans lequel les deux éléments latéraux (12a) sont mutuellement opposés et sont liés par les deux éléments tiges (12b),
dans lequel l'élément formant maillon (12) est formé d'un seul tenant,
dans lequel les éléments tiges (12) sont des éléments longitudinaux présentant une section transversale latérale ovoïde, et
dans lequel la section transversale latérale de chaque élément tige (12b) est sensiblement de la même forme sur toute la longueur de la tige.

15. Patin (10b) pour un système de chenille continue (10) pour un véhicule sur roues comprenant :
un maillon de patin (10c), le maillon de patin (10c) étant fixé au patin (10b) ; et
un élément formant maillon (12), pour lier le maillon de patin (10c) à un maillon de patin adjacent (10c), l'élément formant maillon (12) comprenant :
deux éléments latéraux (12a) ; et
deux éléments tiges (12b),
dans lequel les deux éléments latéraux (12a) sont mutuellement opposés et sont liés par les deux éléments tiges (12b),
dans lequel l'élément formant maillon (12) est formé d'un seul tenant,
dans lequel les éléments tiges (12b) sont des éléments longitudinaux présentant une section transversale latérale ovoïde, et
dans lequel la section transversale latérale de chaque élément tige (12b) est sensiblement de la même forme sur toute la longueur de la tige.
